# EUROPÄISCHE PATENTSCHRIFT

(11) **EP 1 165 354 B1**
(45) Veröffentlichungstag und Bekanntmachung des Hinweises auf die Patenterteilung: **13.08.2003**
(21) Anmeldenummer: 00926672.7
(22) Anmeldetag: 08.03.2000
(51) Int. Cl.: B60T 8/36, H01R 12/16

(54) **ANORDNUNG ZUR KONTAKTIERUNG EINES ELEKTRISCHEN BAUTEILS MIT EINER ELEKTRISCHEN SCHALTUNG**
ARRANGEMENT FOR CONTACTING AN ELECTRIC COMPONENT WITH AN ELECTRIC CIRCUIT
DISPOSITIF PERMETTANT LA MISE EN CONTACT D'UN COMPOSANT ELECTRIQUE ET D'UN CIRCUIT ELECTRIQUE

(30) Priorität: 12.03.1999 DE 19910938
(43) Veröffentlichungstag der Anmeldung: 02.01.2002
(73) Patentinhaber: ROBERT BOSCH GMBH, 70442 Stuttgart (DE)
(72) Erfinder: WETZEL, Gerhard, D-70825 Korntal-Muenchingen (DE)
(86) Internationale Anmeldenummer: DE0000730
(87) Internationale Veröffentlichungsnummer: WO00053475

(56) Entgegenhaltungen:
- EP-A- 0 715 107
- EP-A- 0 872 396
- DE-A- 3 742 320
- DE-A- 19 545 011
- DE-A- 19 718 242
- GB-A- 2 048 585
- US-A- 3 950 070
- US-A- 4 909 750

## Beschreibung

### Stand der Technik

Die Erfindung betrifft eine Anordnung zur Kontaktierung eines elektrischen Bauteils mit einer elektrischen Schaltung nach der Gattung des Anspruchs 1. Die Anordnung ist insbesondere zur Kontaktierung einer Spule eines Magnetventils mit einer elektronischen Regelschaltung einer Schlupfregeleinrichtung einer hydraulischen Fahrzeugbremsanlage vorgesehen. Solche Schlupfregeleinrichtungen weisen üblicherweise mehrere Magnetventile auf, mit denen ein Radbremsdruck in Radbremszylindern modulierund dadurch steuerbar ist. Zur mechanischen Befestigung und zur hydraulischen Verschaltung sind die Magnetventile in einen Hydraulikblock eingesetzt.

Aus der DE 37 42 320 A1 ist eine derartige Anordnung bekannt. Die bekannte Anordnung weist einen Hydraulikblock auf, in den Magnetventile eingesetzt sind. Mit dem Hydraulikblock ist ein schachtelförmiger Deckel verrastet, der ein Stanzgitter aufweist, welches Teil einer elektrischen Schaltung ist. Der Deckel deckt Magnetspulen der Magnetventile ab. Zur Kontaktierung weisen die Spulen von ihrer Stirnseite abstehende Messerkontakte oder Kontaktklemmen und das Stanzgitter von ihm rechtwinklig abstehende Kontaktklemmen oder Messerkontakte auf. Wird der Deckel auf den Ventilblock aufgesetzt, werden durch das Aufsetzen des Deckels die Messerkontakte in die Kontaktklemmen gesteckt, so daß die elektrischen Kontakte der Spulen aller Magnetventile mit den Gegenkontakten des Stanzgitters elektrisch leitend verbunden sind. Nachteil der bekannten Anordnung ist die aufwendige Herstellung der Kontaktklemmen. Desweiteren ist eine eng tolerierte Positionierung der Kontakte der Spulen der Magnetventile in Bezug auf die Gegenkontakte des Stanzgitters notwendig um sicherzustellen, daß beim Aufsetzen des Deckels auf den Hydraulikblock alle Messerkontakte wie vorgesehen in die Kontaktklemmen gesteckt werden.

### Vorteile der Erfindung

Bei der erfindungsgemäßen Anordnung mit den Merkmalen des Anspruchs 1 sind sowohl die elektrischen Kontakte als auch die elektrischen Gegenkontakte beispielsweise als Blechlaschen oder Blechzungen ausgebildet, die durch Stanzen und Biegen einfach herstellbar sind. Dadurch entfällt eine aufwendige Kontaktherstellung. Die Kontakte liegen elektrisch leitend an den Gegenkontakten an. Dabei bildet ein elektrischer Kontakt ein Gegenlager zu einem oder zu mehreren anderen elektrischen Kontakten, so daß von den elektrischen Kontakten ausgeübte Kräfte einander kompensieren. Es können beispielsweise zwei elektrische Kontakte eines elektrischen Bauteils wie beispielsweise der Spule eines Magnetventils von außen an einander abgewandten Flächen oder von innen an einander zugewandten Flächen der elektrischen Gegenkontakte der elektrischen Schaltung anliegen. Auch bei beispielsweise drei elektrischen Kontakten und Gegenkontakten ist es möglich, diese so anzuordnen und auszubilden, daß die von den elektrischen Kontakten ausgeübten Kräfte einander kompensieren. Auf diese Weise wirken keine resultierenden Kräfte auf das elektrische Bauteil und es ist möglich, die Kontakte mit einer hohen Andruckkraft an den Gegenkontakten anliegend auszubilden, ohne daß hierfür Kontaktklemmen oder zusätzliche Verbindungsmittel wie beispielsweise Schrauben erforderlich sind. Ebenso wie die Kontakte des Bauteils bilden auch die Gegenkontakte der elektrischen Schaltung Gegenlager zueinander, die die durch die Gegenkontakte ausgeübten Kräfte kompensieren. Es wirkt also auch auf die elektrische Schaltung keine resultierende Kraft, die eine besondere Positionierung und mechanische Verbindung der elektrischen Schaltung mit dem elektrischen Bauteil erforderlich machen würde. Die Erfindung ermöglicht eine einfache, kostengünstige und sichere Kontaktierung eines oder mehrerer elektrische Bauteile wie beispieltsweise der Spulen von Magnetventilen mit einer elektrischen Schaltung. Weiterer Vorteil ist, daß Genauigkeitsanforderungen an eine Positionierung der elektrischen Schaltung in Bezug auf das elektrische Bauteil gering sind.

Ebenso ist es möglich eine Anzahl elektrischer Bauteile mit einer elektrischen Schaltung zu kontaktieren, wobei nicht die elektrischen Kontakte eines Bauteils, sondern die elektrischen Kontakte mehrerer oder aller Bauteile die Gegenlager bilden, deren Kräfte einander kompensieren. Dies ist Gegenstand des nebengeordneten Anspruchs 2. Es können dadurch zwar resultierende Kontaktkräfte auf einzelne elektrische Bauteile wirken, insgesamt kompensieren diese resultierenden Kontaktkräfte einander. Ebenso kompensieren sich die auf die Gegenkontakte der elektrischen Schaltung ausgeübten Kräfte.

Die Unteransprüche haben vorteilhafte Ausgestaltungen und Weiterbildungen der im Hauptanspruch angegebenen Erfindung zum Gegenstand.

Gemäß Anspruch 3 sind die elektrischen Kontakte der elektrischen Bauteile oder die elektrischen Gegenkontakte der elektrischen Schaltung als Kontaktfedern, beispielsweise als Federzungen ausgebildet. Diese Ausgestaltung der Erfindung ermöglicht einen großen Federweg der Kontakte und/oder Gegenkontakte und läßt daher große Toleranzen zu, was wiederum Herstellung und Montage der erfindungsgemäßen Anordnung vereinfacht und verbilligt.

Bei einer Ausgestaltung der Erfindung gemäß Anspruch 12 sind die elektrischen Kontakte als Kontaktfedern ausgebildet, die nährungsweise in Umfangsrichtung einer Spule der als Magnetventile ausgebildeten elektrischen Bauteile verlaufen. Die Kontaktfedern können an einer Stirnseite oder am Umfang der Spule angeordnet sein. Diese Ausgestaltung der Erfindung bewirkt eine platzsparende Anordnung, die Kontaktfedern können lang ausgebildet sein und weisen dadurch einen großen Federweg bei geringem Platzbedarf auf.

### Zeichnung

Die Erfindung wird nachfolgend anhand in der Zeichnung dargestellter Ausführungsbeispiele näher erläutert. Es zeigen:
Figur 1 eine erfindungsgemäße Anordnung;
Figur 2 eine perspektivische Stirndarstellung einer Spule der Anordnung aus Figur 1;
Figur 3 eine Einzelheit einer abgewandelten Ausführungsform der Erfindung;
Figur 4 eine weitere Abwandlung der Erfindung;
Figur 5 die Abwandelung aus Figur 4 in perspektivischer Darstellung;
Figur 6 eine Einzelheit einer weiteren Ausführungsform der Erfindung und
Figur 7 ein weiteres Ausführungsbeispiel der Erfindung in vereinfachter Darstellung.

Die Figuren sind nicht maßstäblich und teilweise vereinfacht dargestellt.

### Beschreibung der Ausführungsbeispiele

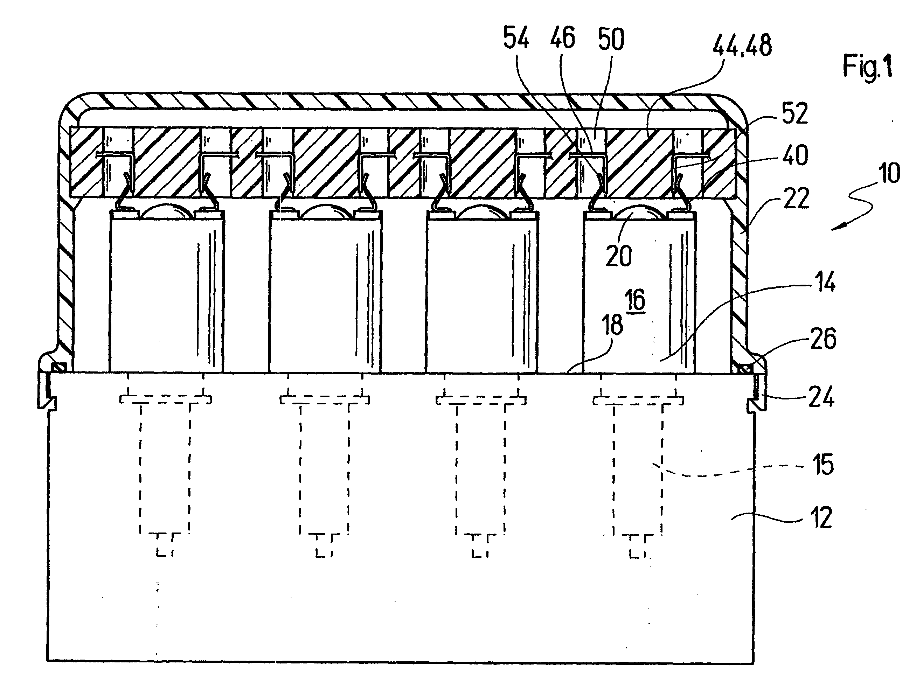

Das in Figur 1 dargestellte Ausführungsbeispiel einer erfindungsgemäßen Anordnung 10 umfaßt einen Ventilblock 10 mit einem Hydraulikblock 12, in den eine Anzahl Magnetventile 14 eingesetzt sind. Der Ventilblock 10 ist Bestandteil einer im übrigen nicht dargestellten Schlupfregeleinrichtung einer hydraulischen Fahrzeugbremsanlage. In den Hydraulikblock 12 sind außer den sichtbaren Magnetventilen 14 weitere, nicht sichtbare, hydraulische Bauelemente wie Rückförderpumpen, Hydrospeicher und Dämpferkammern eingesetzt und hydraulisch miteinander verschaltet. Der Hydraulikblock 12 ist zum Anschluß an einen nicht dargestellten Hauptbremszylinder und zum Anschluß nicht dargestellter Radbremszylinder vorgesehen. Ein hydraulischer, in der Zeichnung mit Strichlinien angedeuteter Teil 15 der Magnetventile 14 befindet sich im Hydraulikblock 12. Spulen 16 der Magnetventile 14 befinden sich auf einer Oberseite 18 des Hydraulikblocks 12. Die Spulen 16 sind auf Ventildome 20 der Magnetventile 14 aufgesetzt, wobei die Ventildome 20 aus dem Hydraulikblock 12 vorstehen. Zum Schutz der Magnetventile 14 vor Schmutz und Feuchtigkeit ist ein schachtelförmiger Deckel 22 auf den Hydraulikblock 12 aufgesetzt und mit Rastzungen 24 mit dem Hydraulikblock 12 verrastet. Ein in einer Nut des Deckels 22 einliegender Dichtring 26 dichtet zwischen dem Deckel 22 und dem Hydraulikblock 12 ab. Die Ventildome 20 und die Spulen 16 der Magnetventile 14 befinden sich in einem vom Deckel 22 und dem Hydraulikblock 12 umschlossenen Raum. Der Deckel 22 ist als Spritzgießteil aus Kunststoff hergestellt, der Hydraulikblock 12 besteht beispielsweise aus einem Aluminium-Druckguß.

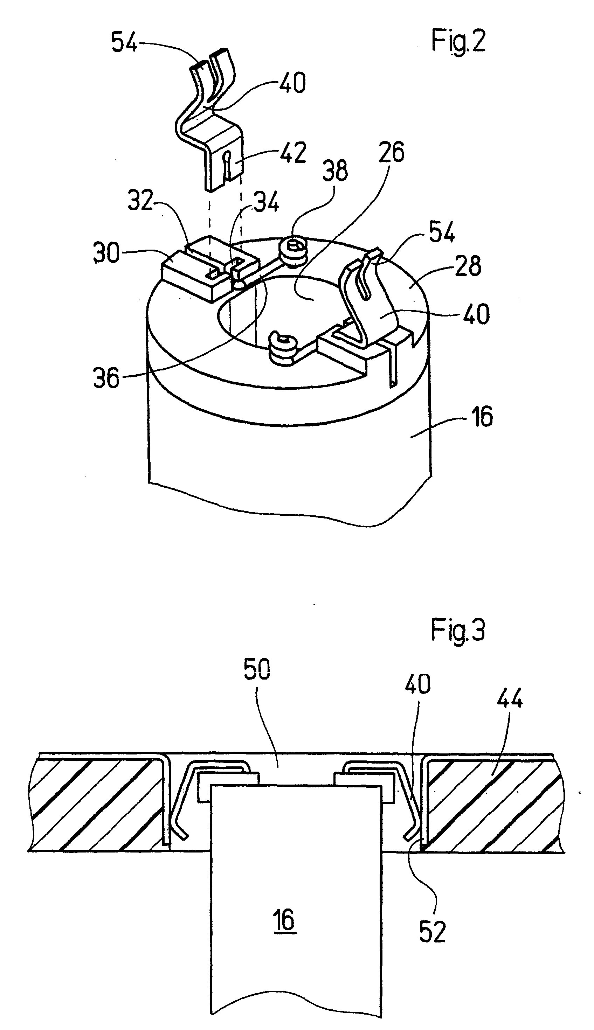

Figur 2 zeigt eine Spule 16 der Magnetventile 14. Die Spule 16 ist auf einen rohrförmigen Spulenträger 26 gewickelt, wobei der Spulenträger 26 an seinen beiden Enden mit ihm einstückige Stirnscheiben 28 mit einem Mittelloch aufweist.

Eine dem Hydraulikblock 12 abgewandte Stirnscheibe 28 bildet eine Kontaktträgerplatte 28 des Magnetventils 14. Die Kontaktträgerplatte 28 weist zwei einander gegenüberliegend angeordnete Erhebungen 30 auf, in denen ein Radialschlitz 32 sowie ein quer zum Radialschlitz 32 verlaufender Querschlitz 34 angebracht sind. Durch den Radialschlitz 32 ist ein Spulendraht 36 der Spule 16 hindurchgeführt, dessen Ende zur Fixierung um einen Fixierzapfen 38 gewickelt ist, der einstückig von der Kontraktträgerplatte 28 absteht. In den Querschlitz 34 ist eine Kontaktfeder 40 klemmend eingesteckt, deren in den Querschlitz 34 eingestecktes Ende als Schlitzklemme 42 ausgebildet ist, wodurch die Kontaktfeder 40 elektrisch leitend mit dem Spulendraht 36 verbunden ist. Die beiden Kontaktfedern 40 bilden elektrische Kontakte der Spule 16 des Magnetventils 14.

Die Kontaktfeder 40 ist aus einem Blechstreifen gebogen, d. h. sie ist als Federzunge ausgebildet. Die beiden Kontaktfedern 40 stehen von der Kontaktträgerplatte 28, also von der dem Hydraulikblock 12 abgewandten Stirnseite des Magnetventils 14 ab, wobei die beiden Kontaktfedern 40 schräg auf einander zu verlaufend geformt sind.

Im Deckel 22 ist eine elektrische Schaltung in Form eines Stanzgitters 44, das in an sich bekannter Weise durch Stanzen aus einem Blech hergestellte Leiterbahnen 46 aufweist, die mit einem Substrat aus Kunststoff umspritzt sind, angebracht. Das plattenförmige Stanzgitter 44 ist parallel zur Oberseite 18 des Hydraulikblocks 12 auf einer dem Hydraulikblock 12 abgewandten Seite der Magnetventile 14 angeordnet, es weist Durchbrechungen 50 auf, in welche die Kontaktfedern 40 der Magnetventile 14 hineinragen.

Das die elektrische Schaltung bildende Stanzgitter 44 weist eine an sich bekannte elektronische Regelschaltung auf, die in der Zeichnung nicht sichtbar ist. Die Regelschaltung kann auf dem Stanzgitter 44 angebracht oder auch mit dem Substrat 48 des Stanzgitters 44 umgossen sein. Ebenfalls ist es möglich, die elektronische Regelschaltung separat vom Ventilblock 10 anzuordnen und über Kabel und eine nicht dargestellte Steckverbindung mit dem Stanzgitter 44 zu kontaktieren.

Zur Kontaktierung der Spulen 16 der Magnetventile 14 mit dem Stanzgitter 44 weist das Stanzgitter 44 elektrische Gegenkontakte 52 auf. Die Gegenkontakte 52 sind in Richtung des Hydraulikblocks 12 umgebogene Enden von Leiterbahnen 46 des Stanzgitters 44. Die Gegenkontakte 52 sind eingebettet in Wandungen der Durchbrechungen 50 des Substrats 48. Es befinden sich jeweils zwei Gegenkontakte 52 des Stanzgitters 44 zwischen den beiden Kontaktfedern 40 der Magnetventile 14, so daß die Kontaktfedern 40 elastisch federnd und elektrisch leitend an den Gegenkontakten 52 anliegen. Die Kontaktierung der Magnetventile 14 als elektrische Bauteile mit dem eine elektrische Schaltung bildenden Stanzgitter 44, also die elektrisch leitende Verbindung der Kontaktfedern 40 mit den Gegenkontakten 52, erfolgt durch das Aufsetzen des Deckels 22 auf den Hydraulikblock 12. Beim Aufsetzen des Deckels 22 auf den Hydraulikblock 12 gelangen die Kontaktfedern 40 der Magnetventile 14 in die Durchbrechungen 50 des Stanzgitters 44, die Kontaktfedern 40 werden dabei elastisch auseinandergedrückt und liegen mit ihrer Federkraft und elektrisch leitend an den Gegenkontakten 52 an. Beispielsweise zu Wartungs- oder Reparaturzwecken ist es ohne weiteres möglich, den Deckel 22 vom Hydraulikblock 12 abzunehmen, nachdem die Rastzungen 24 des Deckels 22 außer Eingriff vom Hydraulikblock 12 gebracht worden sind. Beim Abheben des Deckels 22 wird die Kontaktierung der Magnetventile 14 mit dem Stanzgitter 44 aufgehoben, bei erneuten Aufsetzen des Deckels 22 auf den Hydraulikblock 12 werden die Magnetventile 14 selbsttätig wieder mit dem Stanzgitter 44 kontaktiert. Die Federkräfte, mit denen die beiden Kontaktfedern 40 eines Magnetventils 14 gegen die Gegenkontakte 52 drücken, heben einander auf, so daß keine resultierende Kraft auf die Spule 16 oder das Stanzgitter 44 wirkt, die Kontaktierung ist frei von äußeren Kräften. Die beiden Kontaktfedern 40 eines Magnetventils 14 bilden Gegenlager zueinander, deren Feder- oder Andruckkräfte, mit denen sie gegen die Gegenkontakte 52 drücken, einander gegenseitig kompensieren. Ebenso bilden die Gegenkontakte 52 Gegenlager zueinander, die die auf sie ausgeübten Kräfte kompensieren.

Freie Enden 54 der Kontaktfedern 40 sind schräg auseinander gebogen. Diese Enden 54 bilden Schrägflächen 54, an denen Wandungen der Durchbrechungen 50 des Substrats 48 bzw. die Gegenkontakte 52 die Kontaktfedern 40 beim Aufsetzen des Deckels 22 auf den Hydraulikblock 12 elastisch federnd auseinander drücken.

Figur 3 zeigt eine andere Ausgestaltung einer erfindungsgemäßen Anordnung. Bei der in Figur 3 dargestellten Anordnung sind die Kontaktfedern 40 der Magnetventile 14 nach außen über einen Umfang der Spule 16 gebogen, sie verlaufen in einem spitzen Winkel zur Längsrichtung der Spule 16 schräg nach außen. Das Stanzgitter 44 der in Figur 3 dargestellten Anordnung weist eine Durchbrechung 50 für jedes Magnetventil auf, in die die Spule 16 des Magnetventils mit ihrem dem Hydraulikblock 12 fernen Ende hineinragt. Die Gegenkontakte 52 des Stanzgitters 44 sind einander gegenüberliegend an einer Wandung der Durchbrechung 50 des Stanzgitters 44 angeordnet, die Kontaktfedern 40 der Magnetventile 14 liegen von innen an den Gegenkontakten 52 an. Auch bei dieser Ausgestaltung der Erfindung bilden die beiden Kontaktfedern 40 eines Magnetventils Gegenlager zueinander, deren auf die Gegenkontakte 52 ausgeübten Kräfte einander kompensieren. Ebenso bilden die Gegenkontakte 52 Gegenlager zueinander. Im übrigen ist die in Figur 3 dargestellte Anordnung übereinstimmend mit der in Figur 1 dargestellten Anordnung ausgebildet. Zur Vermeidung von Wiederholungen wird auf die Ausführungen zu Figuren 1 und 2 verwiesen, für übereinstimmende Bauteile werden gleiche Bezugszahlen verwendet.

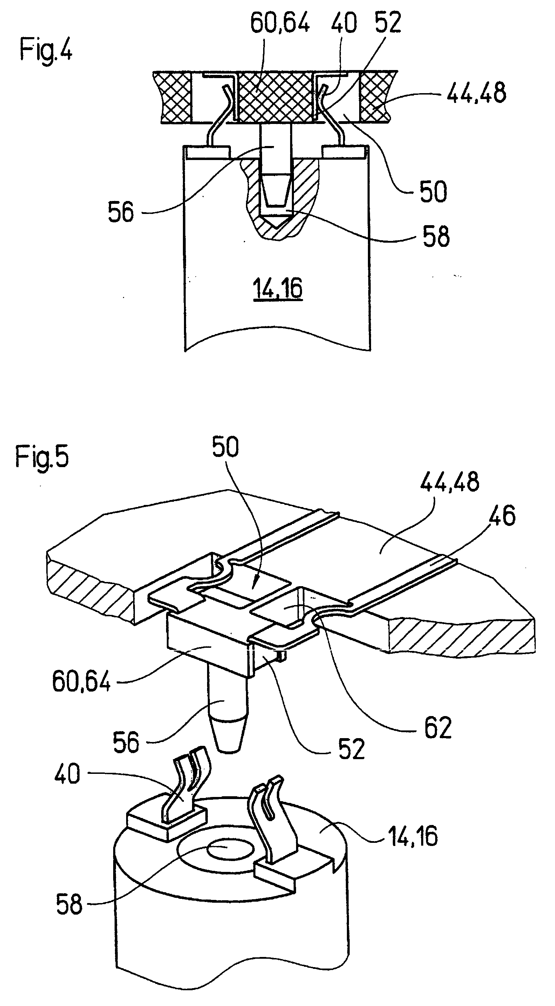

Figuren 4 und 5 zeigen eine Weiterbildung der in Figur 1 dargestellten Ausführungsform der Erfindung. Diese Ausgestaltung der Erfindung weist eine Positioniereinrichtung auf, welche die Gegenkontakte 52 des Stanzgitters 44 in Bezug auf die Spule 16 des Magnetventils 14 und damit in Bezug auf die Kontaktfedern 40 positioniert: Die Positioniereinrichtung weist einen Positionierzapfen 56 auf, der in ein Positionierloch 58 in der Spule 16 eingreift. Der Positionierzapfen 56 ist einstückig mit einem hammerkopfförmigen Abschnitt 60 des Substrats 48 des Stanzgitters 44. Der hammerkopfförmige Abschnitt 60 ist einstückig mit dem Substrat 48, er ist durch eine ihn umgebende Durchbrechung 50 des Substrats 48 gebildet. Ein "Stiel" des hammerkopfförmigen Abschnitts 60 bildet einen dünnen, elastischen Steg 62, der eine seitliche Bewegung eines "Kopfs" 64 des hammerförmigen Abschnitts 60 ermöglicht. Der "Kopf" 64 des hammerförmigen Abschnitts 60 bildet einen Kontakthalter 64, an dessen Seiten die Gegenkontakte 52 des Stanzgitters 44 angebracht sind und von dem der Positionierzapfen 56 einstückig absteht. Die Leiterbahnen 46, deren Enden zu den Gegenkontakten 52 umgebogen sind, sind innerhalb der den hammerförmigen Abschnitt 60 bildenden Durchbrechung 50, in der die Leiterbahnen 46 frei liegen, mäanderförmig ausgebildet, wodurch die Gegenkontakte 52 zusammen mit dem Kontakthalter 64 seitlich bewegbar sind. Beim Aufsetzen des Deckels 22 auf den Hydraulikblock 12 gelangt der Positionierzapfen 56 in das Positionierloch 58 und positioniert dadurch die Gegenkontakte 52 an der Spule 16 und in Bezug auf deren Kontaktfedern 40. Die Positioniereinrichtung ermöglicht größere Toleranzen bei der Anbringung der Magnetventile 14 mit ihren Spulen 16 am Hydraulikblock 12 und bei der Anbringung des Stanzgitters 44 im Deckel 22 sowie bei der Positionierung des Deckels 22 am Hydraulikblock 12. Das Positionierloch 58 muß nicht, wie dargestellt, in der Mitte der Spule 16 angeordnet sein, es kann auch exzentrisch angeordnet werden. Auch kann der Positionierzapfen 56 oder ein anders geformtes Positionierteil an der Spule 16 und das Positionierloch 58 im Stanzgitter vorgesehen werden.

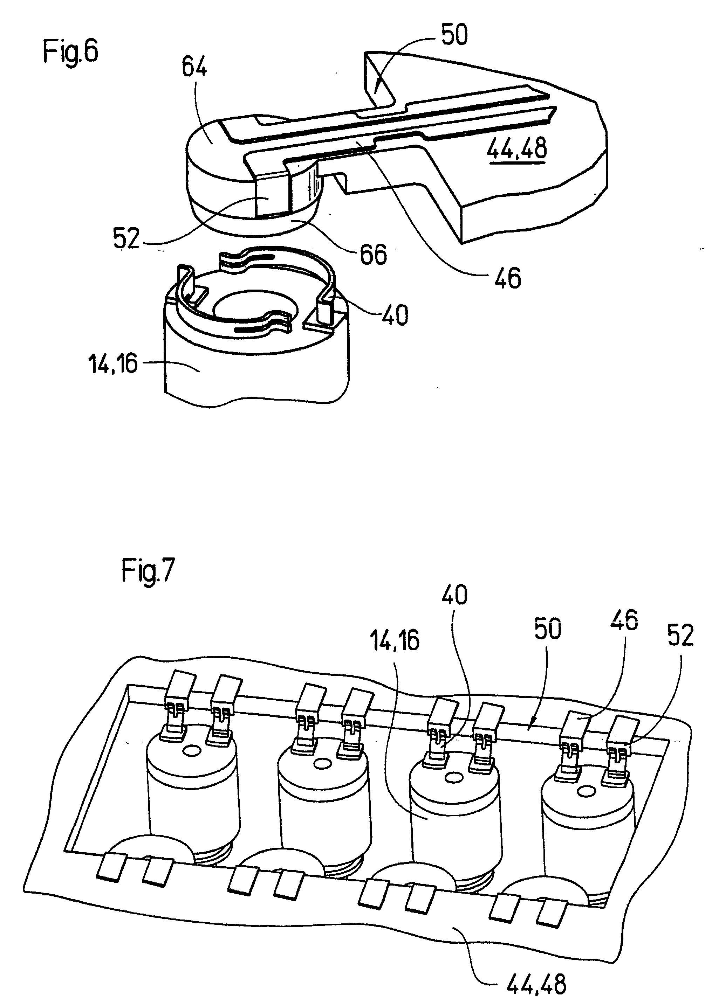

Figur 6 zeigt eine weitere Ausgestaltung der Erfindung. Hier sind die Kontaktfedern 40 der Spule 16 der Magnetventile 14 näherungsweise in Umfangsrichtung verlaufend angeordnet, wobei die Kontaktfedern 40 spiralartig in einem spitzen Winkel zur Umfangsrichtung nach innen verlaufen. Zwischen die Kontaktfedern 40 greift ein in Draufsicht kreisrunder Kopf als Kontakthalter 64 der Gegenkontrakte 52 des Stanzgitters 44 ein. Der Kontakthalter 64 ist wiederum durch eine ihn umgebende Durchbrechung 50 des Substrats 48 des Stanzgitters 44 gebildet. Die Gegenkontakte 52 sind an einander gegenüberliegenden Stellen des Umfangs des Kontakthalters 64 angeordnet. Ein Einführkonus 66 an einer der Spule 16 zugewandten Seite des Kontakthalters 64 drückt die Kontaktfedern 40 der Spule 16 beim Aufsetzen des Deckels 22 auf den Hydraulikblock 12 elastisch auseinander, so daß die Kontaktfedern 40, wie bereits zu Figur 1 beschrieben, elastisch federnd und elektrisch leitend in Kontakt mit den Gegenkontakten 52 gelangen.

Figur 7 zeigte eine weitere Ausgestaltung der Erfindung in schematisierter und vereinfachter Darstellung. Hier sind acht Magnetventile 14 in zwei Reihen mit je vier Magnetventilen 14 in einem Hydraulikblock 12 angeordnet, wie er in Figur 1 dargestellt ist. Die Kontaktfedern 40 der Spulen 16 der Magnetventile 14 sind hier nicht einander gegenüber, sonder nebeneinander an den Spulen 16 angeordnet. Die Kontaktfedern 40 drücken elastisch federnd gegen Gegenkontakte 52, die ebenfalls paarweise an Rändern einer Durchbrechung 50 des Substrats 48 eines Stanzgitters 44 angeordnet sind. Bei dieser Ausgestaltung der Erfindung bilden nicht die beiden Kontaktfedern 40 eines Magnetventils 14 Gegenlager zueinander, sondern die Kontaktfedern 40 eines Magnetventils 14 bilden Gegenlager zu Kontaktfedern 40 des in der anderen Reihe neben dem Magnetventil 14 angeordneten Magnetventils 14. Ebenso bilden nicht die nebeneinander angeordneten Gegenkontakte 52 Gegenlager zueinander, sondern die einander gegenüberliegenden Rändern der Durchbrechung 50 angeordneten Gegenkontakte 52, die zwei Magnetventilen 14 zugeordnet sind.

## Patentansprüche

1. Anordnung zur Kontaktierung eines elektrischen Bauteils (14) mit einer elektrischen Schaltung (44), wobei das elektrische Bauteil (14) mindestens zwei elektrische Kontakte (40) und die elektrische Schaltung (44) mindestens zwei Gegenkontakte (52) aufweist, an denen die elektrischen Kontakte (40) des Bauteils (14) elektrisch leitend anliegen, **dadurch gekennzeichnet, daß** ein elektrischer Kontakt (40) ein Gegenlager zu den anderen elektrischen Kontakten (40) bildet, das von den anderen elektrischen Kontakten (40) ausgeübte Kräfte kompensiert.

2. Anordnung zur Kontaktierung einer Anzahl elektrischer Bauteile (14) mit einer elektrischen Schaltung (44), wobei jedes elektrische Bauteil (14) mindestens einen elektrischen Kontakt (40) und die elektrische Schaltung (44) eine Anzahl von Gegenkontakten (52) aufweist, an denen die elektrischen Kontakte (40) der elektrischen Bauteile (14) elektrisch leitend anliegen, **dadurch gekennzeichnet, daß** ein oder mehrere Gegenkontakte (52) ein Gegenlager zu den anderen Gegenkontakten (52) bilden, das/die von den anderen Gegenkontakten (52) ausgeübte Kräfte kompensiert/kompensieren.

3. Anordnung nach Anspruch 1 oder 2, **dadurch gekennzeichnet, daß** die elektrischen Kontakte (40) und/oder die elektrischen Gegenkontakte (52) als Kontaktfedern ausgebildet sind.

4. Anordnung nach Anspruch 1 oder 2, **dadurch gekennzeichnet, daß** die Anordnung (10) zu den elektrischen Kontakten (40) und/oder Gegenkontakten (52) hinführende Schrägflächen (54) aufweist, an denen die elektrischen Kontakte (40) und/oder Gegenkontakte (52) beim Verbinden der elektrischen Schaltung (44) mit dem elektrischen Bauteil (14, 16) entlang gleiten, wobei die elektrischen Kontakte (40) und/oder Gegenkontakte (52) von den Schrägflächen (54) elastisch zur Seite gedrückt werden, so daß die elektrischen Kontakte (40) und Gegenkontakte (52) mit einer Andruckkraft in eine elektrisch leitende Anlage aneinander kommen.

5. Anordnung nach Anspruch 1 oder 2, **dadurch gekennzeichnet, daß** die Anordnung (10) eine Positioniereinrichtung (56, 58) aufweist, die die elektrischen Gegenkontakte (52) beim Verbinden der elektrischen Schaltung (44) mit dem elektrischen Bauteil (14, 16) in Bezug auf das elektrische Bauteil (14, 16) und dessen elektrische Kontakte (40) positioniert.

6. Anordnung nach Anspruch 5, **dadurch gekennzeichnet, daß** die Positioniereinrichtung (56, 58) zusammen mit den elektrischen Gegenkontakten (52) nachgiebig an der elektrischen Schaltung (44) angeordnet ist.

7. Anordnung nach Anspruch 1 oder 2, **dadurch gekennzeichnet, daß** die elektrische Schaltung (44) ein Stanzgitter (44) aufweist.

8. Anordnung nach Anspruch 7, **dadurch gekennzeichnet, daß** die elektrischen Gegenkontakte (52) einstückig mit dem Stanzgitter (44) sind.

9. Anordnung nach Anspruch 1 oder 2, **dadurch gekennzeichnet, daß** das elektrische Bauteil (14, 16) ein Magnetventil (14, 16) ist.

10. Anordnung nach Anspruch 9, **dadurch gekennzeichnet, daß** das Magnetventil (14,16) in einen Hydraulikblock (12) eingesetzt ist, mit dem die elektrische Schaltung (44) verbunden ist.

11. Anordnung nach Anspruch 10, **dadurch gekennzeichnet, daß** der Hydraulikblock (12) mit dem Magnetventil (14, 16) Teil einer hydraulischen Schaltung einer Schlupfregeleinrichtung einer hydraulischen Fahrzeugbremsanlage ist, und daß die elektrische Schaltung (44) eine elektronische Regelschaltung der Schlupfregeleinrichtung der hydraulischen Fahrzeugbremsanlage aufweist.

12. Anordnung nach Anspruch 9, **dadurch gekennzeichnet, daß** die elektrischen Kontakte (40) als Kontaktfedern (40) ausgebildet sind, die näherungsweise in Umfangsrichtung einer Spule (16) des Magnetventils (14) verlaufen.

## Claims

1. Arrangement for making contact with an electric component (14) with an electric circuit (44), the electric component (14) having at least two electric contacts (40) and the electric circuit (44) having at least two corresponding contacts (52) against which the electric contacts (40) of the component (14) bear in an electrically conductive fashion, **characterized in that** one electric contact (40) forms a corresponding bearing for the other electric contacts (40) which compensates forces exerted by the other electric contacts (40).

2. Arrangement for making contact with a number of electric components (14) with an electric circuit (44), each electric component (14) having at least one electric contact (40) and the electric circuit (44) having a number of corresponding contacts (52) against which the electric contacts (40) of the electric components (14) bear in an electrically conductive fashion, **characterized in that** one or more corresponding contacts (52) form a corresponding bearing for the other corresponding contacts (52) which compensates/compensate forces exerted by the other corresponding contacts (52).

3. Arrangement according to Claim 1 or 2, **characterized in that** the electric contacts (40) and/or the electric corresponding contacts (52) are embodied as contact springs.

4. Arrangement according to Claim 1 or 2, **characterized in that** the arrangement (10) has oblique faces (54) which lead to the electric contacts (40) and/or corresponding contacts (52) and along which the electric contacts (40) and/or corresponding contacts (52) slide when the electric circuit (44) is connected to the electric component (14, 16), the electric contacts (40) and/or corresponding contacts (52) being pushed elastically to the side by the oblique faces (54) so that the electric contacts (40) and corresponding contacts (52) enter into an arrangement in which they bear against one another in an electrically conductive fashion with a pressing-on force.

5. Arrangement according to Claim 1 or 2, **characterized in that** the arrangement (10) has a positioning device (56, 58) which, when the electric circuit (44) is connected to the electric component (14, 16), positions the electric corresponding contacts (52) with respect to the electric component (14, 16) and its electric contacts (40).

6. Arrangement according to Claim 5, **characterized in that** the positioning device (56, 58) together with the electric corresponding contacts (52) is arranged in a flexible fashion on the electric circuit (44).

7. Arrangement according to Claim 1 or 2, **characterized in that** the electric circuit (44) has a punched grid (44).

8. Arrangement according to Claim 7, **characterized in that** the electric corresponding contacts (52) are integral with the punched grid (44).

9. Arrangement according to Claim 1 or 2, **characterized in that** the electric component (14, 16) is a solenoid valve (14, 16).

10. Arrangement according to Claim 9, **characterized in that** the solenoid valve (14, 16) is inserted into a hydraulic block (12) to which the electric circuit (44) is connected.

11. Arrangement according to Claim 10, **characterized in that** the hydraulic block (12) with the solenoid valve (14, 16) is part of a hydraulic circuit of a traction controller of a hydraulic vehicle brake system, and **in that** the electric circuit (44) has an electronic control circuit of the traction controller of the hydraulic vehicle brake system.

12. Arrangement according to Claim 9, **characterized in that** the electric contacts (40) are embodied as contact springs (40) which run approximately in the circumferential direction of a coil (16) of the solenoid valve (14).

## Revendications

1. Dispositif pour la mise en contact d'un composant électrique (14) et d'un circuit électrique (44), le composant électrique (14) présentant au moins deux contacts électriques (40) et le circuit électrique (44) au moins deux contacts conjugués (52) contre lesquels les contacts électriques (40) du composant (14) sont appuyés en conduisant l'électricité,
**caractérisé en ce qu'**
un contact électrique (40) forme pour les autres contacts électriques (40) un appui de réaction qui compense les forces exercées par les autres contacts électriques (40).

2. Dispositif pour la mise en contact d'une pluralité de composants électriques (14) et d'un circuit électrique (44), chaque composant électrique (14) présentant au moins un contact électrique (40) et le circuit électrique (44) présentant une pluralité de contacts conjugués (52) contre lesquels les contacts électriques (40) des composants électriques (14) sont en appuyés en conduisant l'électricité,
**caractérisé en ce qu'**
un ou plusieurs contacts conjugués (52) forment pour les autres contacts conjugués (52) un appui de réaction qui compense les forces exercées par les autres contacts conjugués (52).

3. Dispositif selon la revendication 1 ou 2,
**caractérisé en ce que**
les contacts électriques (40) et/ou les contacts conjugués électriques (52) sont constitués par des ressorts de contact.

4. Dispositif selon la revendication 1 ou 2,
**caractérisé en ce que**
le dispositif (10) présente des surfaces obliques (54) qui mènent aux contacts électriques (40) et/ou aux contacts conjugués (52), et le long desquelles les contacts électriques (40) et/ou les contacts conjugués (52) glissent lorsqu'on assemble le circuit électrique (44) au composant électrique (14, 16), les contacts électriques (40) et/ou les contacts conjugués (52) étant repoussés élastiquement vers le côté par les surfaces obliques (54), de sorte que les contacts électriques (40) et les contacts conjugués (52) viennent s'appuyer l'un contre l'autre avec une force d'application et en conduisant l'électricité.

5. Dispositif selon la revendication 1 ou 2,
**caractérisé en ce que**
le dispositif (10) présente un dispositif de positionnement (56, 58) qui positionne les contacts conjugués électriques (52) par rapport au composant électrique (14, 16) et à ses contacts électriques (40) lorsqu'on assemble le circuit électrique (44) au composant électrique (14, 16).

6. Dispositif selon la revendication 5,
**caractérisé en ce que**
le dispositif de positionnement (56, 58), avec les contacts conjugués électriques (52), est disposé souplement sur le circuit électrique (44).

7. °) Dispositif selon la revendication 1 ou 2,
**caractérisé en ce que**
le circuit électrique (44) présente une grille découpée (44).

8. Dispositif selon la revendication 7,
**caractérisé en ce que**
les contacts conjugués électriques (52) sont en une seule pièce avec la grille découpée (44).

9. Dispositif selon la revendication 1 ou 2,
**caractérisé en ce que**
le composant électrique (14, 16) est une soupape électromagnétique (14, 16).

10. Dispositif selon la revendication 9,
**caractérisé en ce que**
la soupape électromagnétique (14, 16) est montée dans un bloc hydraulique (12) auquel le circuit électrique (44) est relié.

11. Dispositif selon la revendication 10,
**caractérisé en ce que**
le bloc hydraulique (12), avec le composant magnétique (14, 16), fait partie d'un circuit hydraulique d'un dispositif de réglage du patinage d'une installation de freinage hydraulique de véhicule, et **en ce que** le circuit électrique (44) présente un circuit de réglage électronique du dispositif de réglage du patinage de l'installation de freinage hydraulique de véhicule.

12. Dispositif selon la revendication 9,
**caractérisé en ce que**
les contacts électriques (40) sont constitués par des ressorts de contact (40) qui s'étendent approximativement dans la direction circonférentielle d'une bobine (16) de la soupape électromagnétique (14).
